# EUROPEAN PATENT APPLICATION

(11) **EP 2 605 484 A1**
(43) Date of publication of application: **19.06.2013**
(21) Application number: 12196907.5
(22) Date of filing: 13.12.2012
(51) Int. Cl.: H04L 29/08, H04L 29/06

(54) **A transceiver unit and a method for generating bonded streams of data**

(30) Priority: 15.12.2011 IL 21704011
(71) Applicant: LiveU Ltd., 44641 Kfar Saba (IL)
(72) Inventor: Ohayon, Rony Haim, Rehovot (IL); Cohen, Avichai, Ganei-Tikva (IL); Altman, Baruch Yosef, Pardes Hanna (IL)
(74) Representative: Freeman, Avi

(57) **Abstract**

A transceiver unit (20) for generating bonded streams of data includes a data processor (21) to bond a first multiplicity of outgoing streams of data into an outgoing bonded stream. A scheduler (90) transmits the outgoing bonded stream via a second multiplicity of modems (22) for communication over a third multiplicity of wireless or wired channels. An assembly engine (160) receives and assembles the incoming bonded stream from the third multiplicity of wireless or wired channels into a fourth multiplicity of output data.

## Description

The present invention relates to a transceiver unit and a method for generating bonded streams of data.

In embodiments, the present invention relates to remote communication of media and data content generally and to remote wireless surveillance over bonded multiple heterogeneous wireless networks in particular.

Technology for real-time and near real-time remote surveillance systems exists that relies on single cellular modems, single WiFi modems, satellites, MicroWaves (MW) or other Radio (RF) technologies. These existing transmission systems often cannot provide the high level quality of video that may be required for surveillance. In general, high quality video is defined by a high level of QoS (Quality of Service) / QoE (Quality of Experience), video fluency without breakings, pixelization and other artifacts, high resolution full motion (full frames per second), etc. By using a single channel only, existing surveillance transmission technologies are all limited in one or more of the following important areas: low sustainable bandwidth, very low susceptibility to network fluctuations, network congestions, weather conditions, topologies, multipath and fading effects as well as line of site limitations, interferences and signal coverage problems. These limitations can often result in limited video quality, insufficient reliability, low resiliency, no redundancy, poor to no mobility and high costs associated with the deployment and maintenance tailor made infrastructures and/or very expensive end-terminals. These technologies can also be affected by momentary overload, emergency conditions, failures and interference as well as experience poor video quality and viewer experience during live video uplink transmission. Examples of transmission conditions/environments in which the existing solutions often fail include transmission from a helicopter or similar-altitude UAV transmission from a moving vehicle, from under the ground, from indoors, from rural locations with low reception and transmissions at times of networks congestion etc. They may also require additional encryption mechanisms such as SW and/or HW, to protect the transmitted video and data.

According to a first aspect of the present invention, there is provided a transceiver unit for generating bonded streams of data, the unit comprising: a data processor to bond a first multiplicity of outgoing streams of data into an outgoing bonded stream; a scheduler to transmit said outgoing bonded stream via a second multiplicity of modems for communication over a third multiplicity of wireless or wired channels; and an assembly engine to receive and assemble said incoming bonded stream from said third multiplicity of wireless or wired channels into a fourth multiplicity of output data.

According to a second aspect of the present invention, there is provided a transceiver unit for generating generally secure bonded streams of data, the unit comprising: a data processor to encrypt a first multiplicity of outgoing streams of data to be protected into an outgoing bonded stream; a scheduler to direct packets of said outgoing bonded stream towards a second multiplicity of modems for communication over a third multiplicity of wireless channels, wherein at least one channel has data from more than one outgoing stream, and: an assembly engine to receive and assemble said incoming bonded stream from said third multiplicity of wireless channels into a fourth multiplicity of output data.

According to a third aspect of the present invention, there is provided a transceiver unit for communicating with at least one media device for remote viewing purposes, the unit comprising: a connection to said at least one media device; a data processor to bond a first multiplicity of outgoing streams from said at least one media device at a remote viewing location into an outgoing bonded stream; a scheduler to transmit said outgoing bonded stream via a second multiplicity of modems for communication at least over a third multiplicity of wireless channels servicing said remote viewing location; and a device controller to instruct said at least one media device.

According to fourth aspect of the present invention, there is provided a method for generating bonded streams of data, the method comprising: bonding a first multiplicity of input streams of data into an outgoing bonded stream; scheduling said outgoing bonded stream for transmission via a second multiplicity of modems for communication over a third multiplicity of wireless or wired channels; and receiving and assembling said incoming bonded stream into a fourth multiplicity of output data.

According to fifth aspect of the present invention, there is provided a method for generating generally secure bonded streams of data, the method comprising: encrypting and scrambling a first multiplicity of outgoing streams of data to be protected into an outgoing bonded stream; scheduling packets of said outgoing bonded stream towards different ones of a second multiplicity of modems for communication over a third multiplicity of channels, wherein at least one channel has data from more than one outgoing stream; and receiving and assembling said incoming bonded stream into a fourth multiplicity of data output streams.

According to a sixth aspect of the present invention, there is provided a method for use with at least one media device for remote viewing purposes, the method comprising: connecting to at least one media device; bonding a first multiplicity of outgoing streams from said at least one media device at a remote viewing location into an outgoing bonded stream; transmitting said outgoing bonded stream via a second multiplicity of modems for communication over a third multiplicity of wireless channels servicing said remote viewing location; and instructing said at least one media device.

There is provided, in accordance with a preferred embodiment of the present invention, a transceiver unit for generating bonded streams of data. The unit includes a data processor, a scheduler and an assembly engine. The data processor bonds a first multiplicity of outgoing streams of data into an outgoing bonded stream. The scheduler transmits the outgoing bonded stream via a second multiplicity of modems for communication over a third multiplicity of wireless or wired channels. The assembly engine receives and assembles the incoming bonded stream from the third multiplicity of wireless or wired channels into a fourth multiplicity of output data.

There is also provided, in accordance with a second preferred embodiment of the present invention, a transceiver unit for generating generally secure bonded streams of data. The unit includes a data processor, a scheduler and an assembly engine. The data processor encrypts a first multiplicity of outgoing streams of data to be protected into an outgoing bonded stream. The scheduler directs packets of the outgoing bonded stream towards a second multiplicity of modems for communication over a third multiplicity of wireless channels, wherein at least one channel has data from more than one outgoing stream. The assembly engine receives and assembles the incoming bonded stream from the third multiplicity of wireless channels into a fourth multiplicity of output data.

There is still further provided, in accordance with a third preferred embodiment of the present invention, a transceiver unit for communicating with at least one media device for remote viewing purposes. The unit includes a connection to the at least one media device; a data processor, a scheduler and a device controller. The data processor bonds a first multiplicity of outgoing streams from the at least one media device at a remote viewing location into an outgoing bonded stream. The scheduler transmits the outgoing bonded stream via a second multiplicity of modems for communication at least over a third multiplicity of wireless channels servicing the remote viewing location. The device controller instructs the at least one media device.

Moreover, in accordance with a preferred embodiment of the present invention, the outgoing data stream includes at least one of IP audio/video, non IP audio/video, non-embedded separated audio and non-audio/video data.

Further, in accordance with a preferred embodiment of the present invention, the unit further includes a decoder to decode the at least one of the IP audio/video streams.

Still further, in accordance with a preferred embodiment of the present invention, the unit includes an encrypter to encrypt any outgoing data per individual data streams.

Additionally, in accordance with a preferred embodiment of the present invention, the unit also includes an encrypter to encrypt any outgoing data per bonded data stream.

Further, in accordance with a preferred embodiment of the present invention, the unit includes a decrypter to decrypt any incoming data per individual data stream.

Still further, in accordance with a preferred embodiment of the present invention, the unit includes a decrypter to decrypt any incoming data per bonded data stream.

Moreover, in accordance with a preferred embodiment of the present invention, each wireless channel is one of the following wireless channels: a cellular channel, a satellite channel, a Wi-Fi channel, a WiMax channel, microwave, COFDM, a dedicated RF (radio frequency) channel and a proprietary channel.

Further, in accordance with a preferred embodiment of the present invention, the media device includes at least one of an IP sensor, a non IP sensor, an IP camera, a non IP camera and a computer.

Still further, in accordance with a preferred embodiment of the present invention, the scheduler includes a packet director to direct packets of the outgoing bonded stream towards different ones of the modems, wherein at least one channel has data from more than one outgoing stream.

Moreover, in accordance with a preferred embodiment of the present invention, the device controller includes a unit to pass media control instructions from a remote controller.

Further, in accordance with a preferred embodiment of the present invention, the unit also includes a traffic analyzer to analyze performance statistics for at least each of the second multiplicity of modems and the device controller includes a unit to control at least one external media encoder present in the at least one media device, according to the output of the traffic analyzer.

There is also provided, in accordance with a preferred embodiment of the present invention, a method for generating bonded streams of data. The method includes bonding a first multiplicity of input streams of data into an outgoing bonded stream, scheduling the outgoing bonded stream for transmission via a second multiplicity of modems for communication over a third multiplicity of wireless or wired channels and receiving and assembling the incoming bonded stream into a fourth multiplicity of output data.

There is further provided, in accordance with a preferred embodiment of the present invention, a method for generating generally secure bonded streams of data. The method includes encrypting and scrambling a first multiplicity of outgoing streams of data to be protected into an outgoing bonded stream, scheduling packets of the outgoing bonded stream towards different ones of a second multiplicity of modems for communication over a third multiplicity of channels, wherein at least one channel has data from more than one outgoing stream, and receiving and assembling the incoming bonded stream into a fourth multiplicity of data output streams.

There is still further provided, in accordance with a preferred embodiment of the present invention, a method for with at least one media device for remote viewing purposes. The method includes connecting to at least one media device, bonding a first multiplicity of outgoing streams from the at least one media device at a remote viewing location into an outgoing bonded stream, transmitting the outgoing bonded stream via a second multiplicity of modems for communication over a third multiplicity of wireless channels servicing the remote viewing location and instructing the at least one media device.

Moreover, in accordance with a preferred embodiment of the present invention, the outgoing data stream includes at least one of IP audio/video, non IP audio/video, non-embedded separated audio and non-audio/video data.

Further, in accordance with a preferred embodiment of the present invention, each wireless channel is one of the following wireless channels: a cellular channel, a satellite channel, a Wi-Fi channel, a WiMax channel, microwave, a dedicated RF (radio frequency) channel and a proprietary channel.

Still further, in accordance with a preferred embodiment of the present invention, the media device includes at least one of an IP sensor, a non IP sensor, an IP camera, a non IP camera and a computer.

Finally, in accordance with a preferred embodiment of the present invention, the instructing also includes controlling at least one external media encoder present in at least one the media device according to performance statistics of a traffic analyzer.

Embodiments of the present invention will now be described in detail with reference to the accompanying drawings, in which:
Fig. 1 is a schematic illustration of a remote wireless communication system constructed and operated in accordance with an embodiment of the present invention;
Fig. 2 is a schematic illustration of the communication between 3 units of the system illustrated in Fig. 1;
Figs. 3A and 3B are block diagrams showing the elements of a bonded transceiver constructed and operated in accordance with an embodiment of the present invention; and
Figs. 4A and 4B are block diagrams showing the elements of a data processor constructed and operated in accordance with an embodiment of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

Applicants have realized that for purposes of remote surveillance and in particular the surveillance of security sensitive areas such as security borders, or for following suspects from a moving vehicle, a data uplink transmission system that can send multiple types of information (data, sensor, video etc.) using logically-bonded multiple modems (described in more detail herein below) of the same wireless communication network and/or of various/different wireless networks, may enable the relatively efficient transmission of live high quality video up to and beyond full HD, including 3D live/real time video transmission as well as megapixel camera output etc.. Such a data uplink transmission system may also enable more video continuity, overcome transmission difficulties in difficult areas such as underground tunnels, high rise building floors, rural areas and poor coverage areas and may overcome difficulties due to permanent or temporary network problems and failures, RF interferences, network overloading by other users etc., at reasonable low cost without new network deployment and maintenance. Such a system may also provide the opportunity for surveillance from afar and transmission "on the go" of different scenarios such as from moving vehicles, aerial surveillance and underground/indoor activity etc. covering more usage scenarios and providing much more redundancy and often at a much lower cost compared to high-bandwidth satellite links such as VSAT or specially deployed networks.

Applicants have also realized that bonded broadband, such as described in US Patent 7,948,933 incorporated herein by reference and assigned to the common assignee of the present invention, may be utilized for high quality surveillance as described hereinabove and may also be secure. Since this technology sends data packets over multiple links in an unpredictable continually changing momentary manner and since it combines multiple connections through wireless services into one stable, high bandwidth IP link, applicants have realized that the resultant type of bonded system is particularly useful for transmitting live, high quality and security sensitive data in a continual/non-breaking and resilient fashion from almost anywhere.

Applicants have further realized that if the flow of data is bi-directional, output that is received may be used to influence the input such as changing the angle of view and performance of a pan-tilt video security camera which may be referred to as the "Pan Tilt Zoom" (PTZ) capability, described in more detail herein below, and which may be very useful to the unmanned remote management of surveillance.

Applicants have further realized that this system may be convenient to use due to its dependence on existing, rather than on only tailor-made, wireless or wired infrastructures. This may render the system suitable for remote and portable transmission and reception.

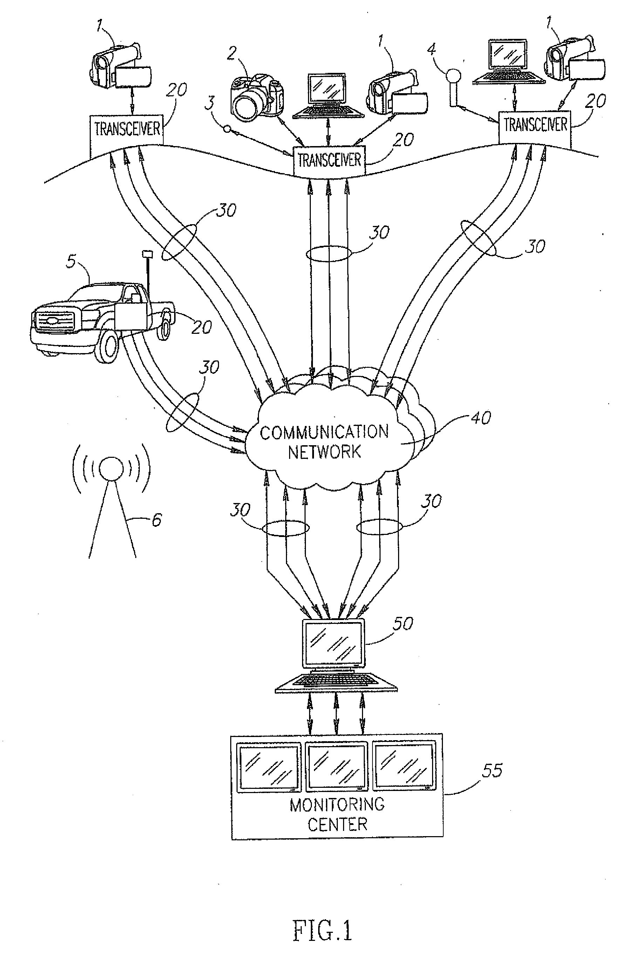

Reference is now made to Fig. 1 which illustrates a novel system for transmitting and receiving different types of information from any remote location to potentially another remote location. A pertinent example may be a security border where various devices for capturing live information and/or recording information such as an already-encoded/compressed IP/network audio/video camera 1, a non IP camera such as analog composite camera or an HD-SDI camera 2, IP sensory device 3 and audio device 4 may be subtly affixed to different portions of a security fence in order to monitor real time activity. Each form of external device, (cameras 1, 2, sensor 3, etc.) may be connected to a bonded transceiver 20 which may have the ability to encrypt and interleave incoming data feeds as well as to transmit and receive a multiplicity of data streams 30 over bonded communication links from a multiplicity of data sources through a multiplicity of communication networks 40.

Communication network 40 may be any combination of single or bonded multiple links of satellite, cellular, microwave (MW), COFDM, Wimax, or Wi-Fi or any other wireless or wired type of communication network, technologies and operators. Alternatively data streams may be transmitted and received accordingly from jeep 5 which may be carrying a portable bonded transceiver 20 and may be patrolling the same security fence. A portable bonded transceiver 20 may also be carried by a person using a backpack or other means of carrying. Antenna 6 may be positioned within a remote area with poor reception.

From communication network 40, transmitted data streams 30 may be transmitted or received by multiple modems connected to a laptop/personal computer 50 with pertinent processing software and may further be transmitted, if desired, from PC 50 to one or more surveillance units 55. The entire process may also be bi-directional and thus bonded data streams 30 may be transmitted to and from the border live, in high quality (up to full HD and even 3D video), with redundancy and without the added risks associated with failing network performance in a secure manner.

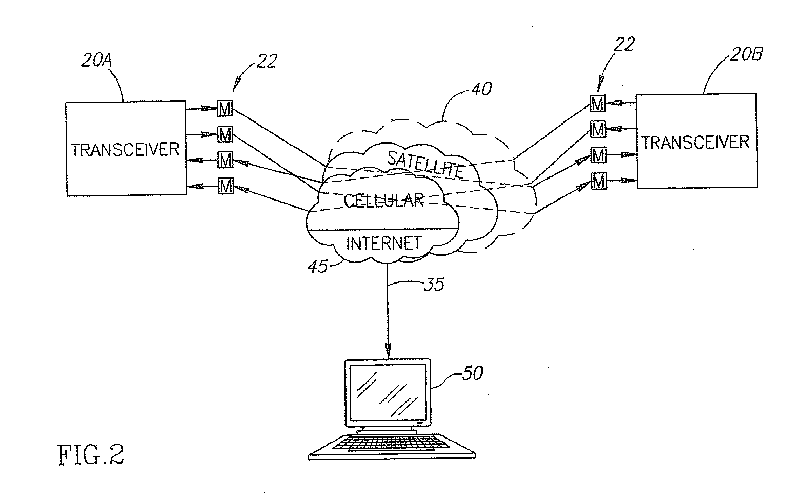

Reference is now made to Fig. 2 which further illustrates the system. Fig. 2 shows two bonded transceivers 20A and 20B and laptop 50. Each bonded transceiver 20A or 20B may have associated therewith multiple modems 22, some of which, for clarity, are shown transmitting data and some are shown receiving data. Each individual modem may have the capability of both transmitting and receiving data simultaneously.

Bonded transceivers 20 may communicate bi-directionally with each other through any type of wireless communication network 40. In addition, bonded transceivers 20 may also communicate with computer 50 via the Internet 45, typically through a single modem connected to the Internet 45. In other words, the multiple streams within bonded transceiver 35 may be directed to the same Internet address. Thusly a remote operator positioned at computer 50 may monitor and communicate with devices 1, 2, 3, 4 and 5 connected to bonded transceivers 20.

The bi-directionality of the present invention may be useful for the border surveillance system mentioned above. For example, it may be desired to have a camera affixed along a security fence to take video. It may be insufficient to have the camera take the video on its own. The "Pan Tilt Zoom" capability may allow a remote operator to manage the viewing device such as camera 1 through the application itself, relying on multiple downlink channels to deliver commands. It will be appreciated that the operator may avoid potential problems that might occur when relying on other, single-link, dedicated or integrated channels, such as lack of coverage by the cellular or other wireless operator which the single downlink link/modem is using. It will further be appreciated that if the latency of any such single link goes up, the system functionality becomes impaired whereas in this invention, with its multi-link solution, the downlink commands may be delivered on the most relevant link, arriving with shorter latency and higher probability. Such downlink capability of sending to the transmitter and from it to the remote operators and connected devices, may also be used to send audio commands to the transmitter operator, such as a soldier based at the border providing high resiliency and redundancy by using multiple links and networks simultaneously.

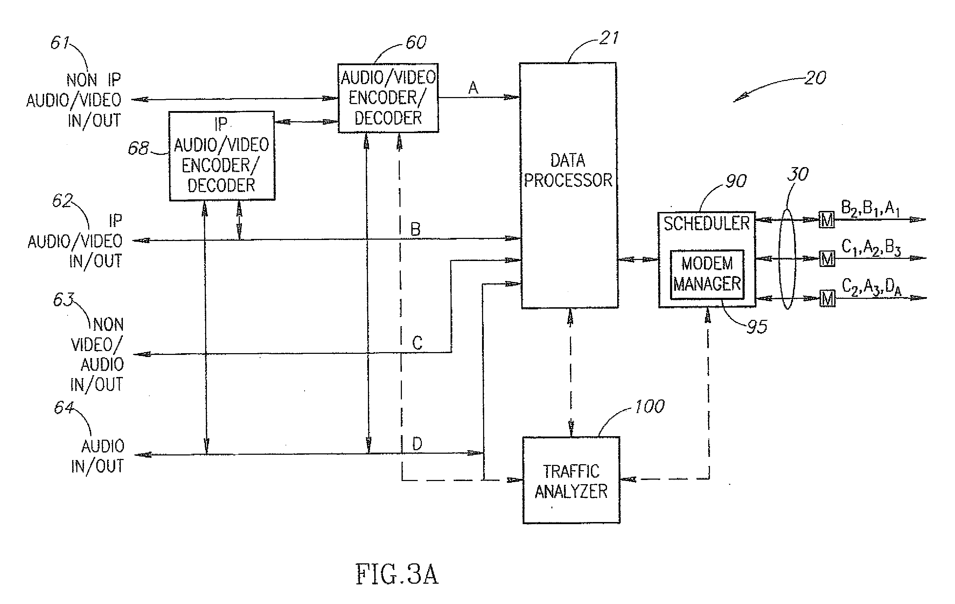

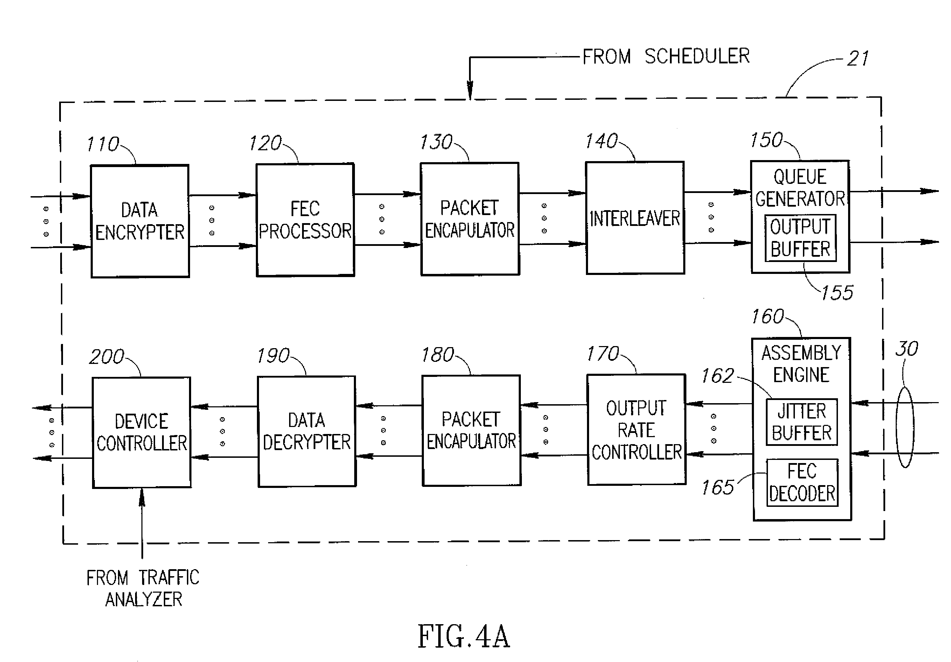

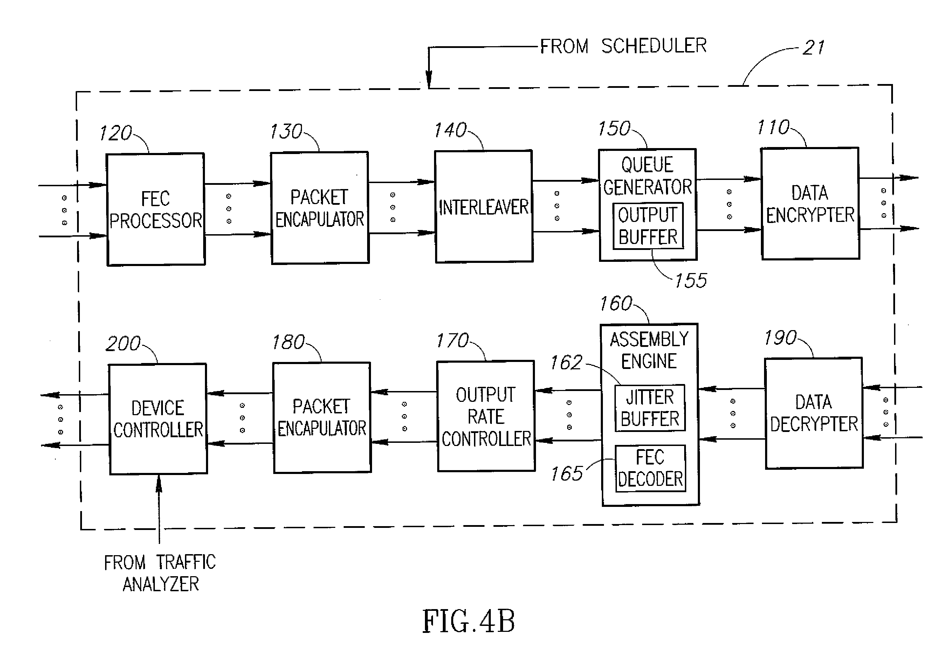

Reference is now made to Fig. 3A, which illustrates the elements of bonded transceiver 20. Transceiver 20 may comprise a video encoder/decoder 60, an IP audio/video encoder/decoder 68, a data processor 21, a scheduler 90, a traffic analyzer 100 and multiple modems 22. Scheduler 90 may comprise a modem manager 95. The transmission operation will be described first. In a reverse procedure, incoming streams may be received, re-assembled, decapsulated, decrypted etc. to its original format. This is shown in more detail with respect to Figs. 4A and 4B. In an alternative embodiment of the current invention IP video decoder 68 may be combined with video encoder 60 into a video transcoder. These can be implemented as either software or hardware. In an alternative embodiment of the current invention, multiple modems 22 may be external to transceiver 20.

Transceiver 20 may receive different types of data input which may comprise non IP audio/video 61 (such as analog video, SD, HD and 3D etc.), IP audio/video 62, non-audio/video data 63 and non-embedded separated audio data 64.However, to enable higher efficiency and live video continuity, audio/video encoding may be dynamically controlled by the system such as by data processor 21 and scheduler 90. Therefore, IP audio/video 62 may first be decoded by IP audio/video decoder 68, and then may be fed into audio/video encoder 60 that is controlled and adapted in real time by scheduler 90 and data processor 21.

It will also be appreciated that non-IP audio/video 61 may be fed directly into audio/video encoder 60 which may be controlled and adapted in real time by scheduler 90 and data processor 21. Non-embedded audio input 64 may be also be fed into the transceiver via audio/video encoder 68 or via video encoder/decoder 60, which may be controlled and adapted in real time by scheduler 90 and data processor 21. Non-audio video data 63 may be fed into the data processor 21 without going through any audio/video encoding or decoding.

It will be appreciated that multiple input data streams comprising different data formats (such as streams A, B, C and D as illustrated) may be processed by data processor 21 both individually and simultaneously. Data processor 21 may encrypt (e.g. AES 256 or other scheme), encapsulate and interleave the incoming streams so that they may be transmitted over multiple modems 22 as bonded streams according to a schedule initiated by scheduler 90. Scheduler 90 may receive information from traffic analyzer 100 which may analyze performance statistics from the ongoing system and any modems 22. The performance statistics may also include the size and content of the queues waiting to be transmitted by modems 22. Traffic analyzer 100 may also be used to optimize the quality and flow of the multiplicity of connections.

Scheduler 90 may allocate different priorities to the outgoing data streams at the packet level, depending on their attributes such as video vs. web surfing, per video packet type (such as B-frame or I-frame, or audio-frame), or FEC packet vs. audio-FEC packet, or UDP or TCP packet or their relevancy such as timestamp vs. current time or predicted arrival time.

Scheduler 90 may also allocate different priorities to the outgoing data streams according to information provided by traffic analyzer 100 (such as momentary readiness/delay/bandwidth/loss rate/jittery behavior, predicted performance and other modems' status and performance). Scheduler 90 may also use QoS/QoE considerations to help identify which packet should be allocated to which link during transmission. Scheduler 90 may instruct modem manager 95 to allocate data packets for transmission according to the availability of modems 22. Moreover, scheduler 90 may select packets for transmission through a particular modem from any of the processed data streams. Thus, a modem 22 may transmit a signal having multiple data streams therein. For example, modem 22 may transmit packet A₁ followed by packet B₁, followed by packet B₂, where packet Aᵢ is from data stream A, packet Bᵢ is from data stream B etc.

Modem manager 95 may also coordinate whether modems 22 transmit or receive. There may typically, but not necessarily, be one modem manager 95 for each modem 22.

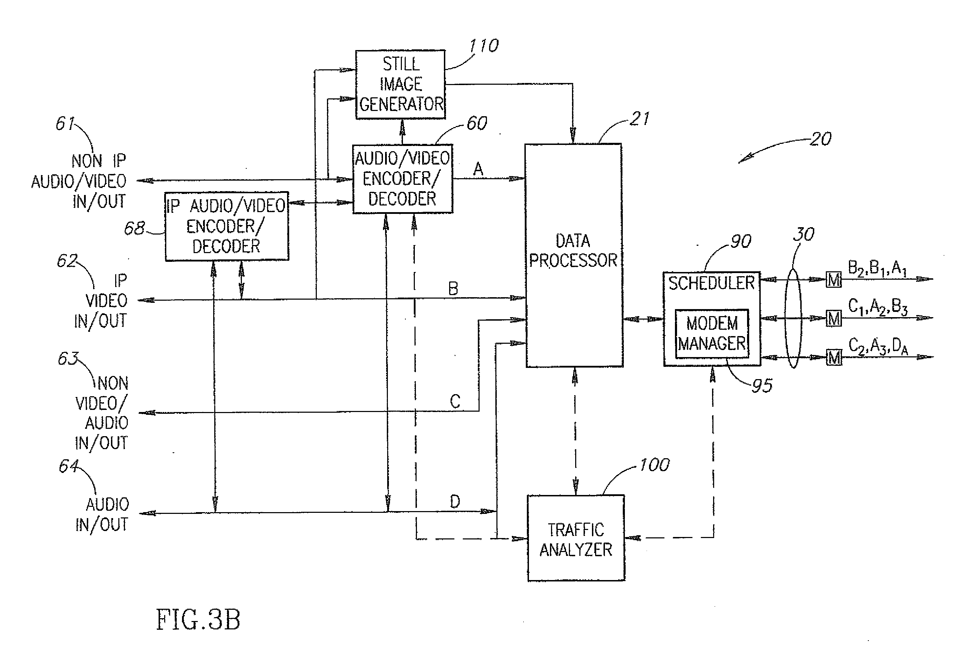

In an alternative embodiment, as illustrated in Fig. 3B to which reference is now made, video encoder 60 may be attached to a still image generator 110. Still image generator 110 may be used to create still images from either or both IP and non IP audio/video streams. Video encoder/decoder 60 may then process these still images side by side with any video. Scheduler 90 may control the resolution of generated images from still image generator 110 by reducing the frame time of the snapshot if the available bandwidth is low. The resolution may also be manually controlled by the remote operator.

Applicants have further realized that certain media devices such as cameras may include their own IP video encoder. It will be appreciated that in some cases, the incoming IP A/V stream to transceiver 20 may be decoded and then re-encoded using video encoder/decoder 68. In other cases it may be beneficial to instruct the external A/V IP encoder to use a particular video encoding pattern, such as a particular resolution, constant of variable bit rate encoding, frames per seconds, certain quantification, encoding rate etc. In such cases the internal video encoder/decoder may be eliminated, resulting in lower cost, lower power consumption and lower complexity devices, while potentially resulting in higher dynamic video quality.

It will be appreciated that the appropriate video encoding pattern may be determined from information obtained from traffic analyzer 100 and optionally, from scheduler 60, and may be used to alter the bit rate and/or other parameters of the incoming streams to transceiver 20. It will also be appreciated that this instruction in real time may be implemented using standard industry protocols such as ONVIF (Open Network Video Interface Forum), PSIA (Physical Security Interoperability Alliance (PSIA), or proprietary ones. It will also be appreciated that more than a single such external IP-encoding device may be connected to transceiver 20, such as multiple IP cameras each containing their own IP encoder (H.264 or other, mpeg4-TS or other). Transceiver 20 may then interact using these ONVIF or other protocols to communicate with each device and may instruct the A/V encoder of each device separately. Transceiver 20 may also consider the total transmissions from all such devices and the existing encoded streams when determining the appropriate parameters for each media device.

It will also be appreciated that the appropriate video encoding pattern for these external devices may also be influenced by the preferences of a remote operator such as the selection of which stream is to be seen at what resolution, frames per second etc. For example, a remote operator may wish to monitor one media device in a half screen and another two media devices each in quarter screen using lower frames per second. Transceiver 20 may receive the remote operator preferences and/or the current settings of each media device from the media device itself. Transceiver 20 may then adaptively and in real time, according to the momentary link performance as described herein below, alter either the encoder parameters of transceiver 20 itself and/or change the parameters of each of the connected media devices if they have such a built in IP video encoder. It will be appreciated that in this way, a single incoming stream may be encoded according to available bandwidth and QoS/QoE thresholds. The encoders of multiple incoming already-encoded streams may also be controlled in a similar way by using an algorithm that weighs such video related parameters and momentary link performance parameters to define and target a ratio between these incoming encoded streams in order to also meet the operator requirements, such as half screen viewing of one media device and two quarter screen viewing of another two media devices, or in terms of resolutions rather than screen portion, or in terms of relative quality difference such as different encoding bandwidths or frames per seconds or profiles, etc. In other cases, instead of a ratio between the media streams, an absolute value may be defined for each stream, a minimum and/or a maximum value, an approximated or a dynamic ratio i.e. not fixed but changing over time according to the various encoding outputs and link performances levels, or any mix of the above together with target, optimization algorithms and functions.

As mentioned hereinabove, transceiver 20 may bond incoming data streams from external media devices with internal encoders together with incoming data streams from other devices. Moreover, transceiver 20 may determine the appropriate encoding for all the media devices as a function of the overall performance statistics of all modems 22.

Reference is now made to Fig. 4A, which illustrates the elements of data processor 21. Data processor 21 may comprise of a FEC (forward error correction) processor 120, a packet encapsulator 130, an interleaver 140 and a queue generator 150. These elements are functionally similar to those described in in US 7,948,933. Data processor unit 21 may also comprise a data encrypter engine 110 situated before FEC processor 120 to encrypt data with encryption keys. In an alternative embodiment to the present invention as illustrated in Fig. 4B to which reference is now made, data encrypter engine 110 may also be situated directly before or after queue generator 150 in order to encrypt data per modem/stream.

It will be appreciated that all the elements of data processor 21 may work per individual stream, typically when one stream has a higher priority as assigned by scheduler 90, and also on all streams together, typically when no priority has been set.

Data encrypter engine 110 may encrypt both data and control packets using the same keys for both as mentioned above according to incoming data format. It will be appreciated that not all incoming data requires encryption, for example video input may and web surfing may not. Alternatively, data encrypter engine 110 may encrypt with different keys, both public and/or private, per type of data (e.g. video vs. web surfing). Similarly, data encrypter engine 110 may encrypt per individual stream by using a different key per any one channel/modem or per a group of channels/modems.

FEC processor 120 may initially divide the incoming data stream into packets and it may add extra packets with FEC codes. FEC codes consist of information that may be used to reconstruct missing or improper packets if the need arises. Packet encapsulator 130 may add serial numbers and time stamps to each data and FEC packet. Packet encapsulator 130 may also stamp the package with its data format. It will be appreciated that different data formats (video, data, audio etc.) may not be encapsulated together during the encapsulation process although there may be some form of aggregation. It will further be appreciated that packets of different data formats may be sent randomly through the same channel.

Interleaver 40 may attempt to minimize the impact of packets lost as a result of a break in transmission. The packets may be "shuffled", resulting in an output order which may reduce exposure to the loss of consecutive packets due to a given transmission error. This "shuffling" of data may also provide a further element of security/data protection to the data transmission process.

The interleaved packets are then forwarded to queue generator 150. Queue generator 150 may comprise output buffers 155. Output buffers 155 may store the outgoing interleaved packets, one buffer 155 per stream, until they are pulled by scheduler 90 (Fig. 3A) for transmission.

In a reverse procedure, incoming streams may be received from several different connections via the same multiple modems 22 which are also used during transmission. Returning to Fig. 4A, for reception, data processor 21 may comprise an assembly engine 160, output rate controller 170, packet decapsulator 180,data decrypter 190 and device controller 200. Assembly engine 160 may receive incoming multiple bonded streams via modems 22 for processing and may re-assemble the incoming packets into their correct order. Assembly engine 160 may comprise a smart jitter buffer 162 and FEC decoder 165. Smart jitter buffer 162 may store incoming packets until order is restored while FEC decoder 165 ensures that packets are not missing. It will be appreciated that each incoming stream may have its own separate buffer 162. The assembled stream may be forwarded to output rate controller 170 which may regulate the rate at which the serial packet stream is released. Output rate controller 170 may then forward the stream to packet decapsulator 180 to remove packet information. Thusly the incoming bonded streams are re-assembled accordingly. These elements are functionally similar to those described in US 7,948,933.

It will be appreciated that the pertinent incoming assembled streams may be directed to the appropriate device by device controller 200 according to appropriate IP address of the device. For example, an assembled stream may contain Pan-Tilt-Zoom or other instructions from a remote operator to manage the pertinent media device.

It will be further appreciated that, in this manner, device controller 200 may also instruct pertinent devices which have their own built in encoders, such as those like IP audio/video 62 which may produce a pre-encoded input such as a stream of an H.264, or another audio/video encoding method, over mpeg4-TS, or another transport standard, encapsulated in IP (V4, V6 etc.), to encode their incoming streams according to performance statistics from traffic analyzer 100 as described herein above. In this case, device controller 200, based on information from traffic analyzer 90 and/or the data processor 21 as well as according to the current status of each such external media encoder and/or the remote operator's preferences for viewing, may send real time commands to read and set the external media encoder parameters that impact its video quality and bandwidth output, such as encoding rate, quantization, resolution, frames per second, profile etc.

In an alternative embodiment to the present invention, part or all of the functionality of transceiver 20 may be performed by cloud software.

It will be appreciated that for the above mentioned system, data may be encrypted, encapsulated, interleaved and then transported over multiple modems and channels providing multiple processes contributing to the secure transmission of security sensitive data.

It will also be appreciated that having multiple modems 22, and therefore links to one or more networks, at both sides of transceivers 20A and 20B may be more advantageous than the prior art such as US PAT 7,948,933 ( incorporated herein by reference and assigned to the common assignee of the present invention). It will be appreciated the appearance of the multi IP addresses and/or ports on both ends, some of which may not even be fixed or publicly known, may create a multitude of potential paths between the two sides (transmitting and receiving). These need to be monitored and evaluated by the two sides in order to understand which packet to send on which modem 22 to which other modem 22, under the different momentary performance of each such path. It will also be appreciated, that the information exchanged between the two sides regarding the handling of lost packets and potential load balancing between modems, etc. need to take into account these multitude of potential paths, with minimal overhead in additional bandwidth and/or latency, in order to minimize the impact on the overall performance. Such algorithms may include algorithms to create "good enough" rather than optimal paths and "educated/learned guess" paths, where information is pre-known for some of the paths. Other algorithms may also include multicasting to several IP destinations and taking care of information that may be received several times over. Another option may be a relay point in the middle where the two sides communicate with the relay point as multi modems to a single point.

It will be further appreciated that for the above mentioned system, we can expect a better high quality transmission with a higher probability of success when compared to any single-link/modem uplink or downlink control. These single-link/modem uplinks or downlinks may not have coverage at all, or may suffer from momentary permanent failures due to network performance, topography, position, antenna, or even simply modem failure. Another better performance may also be achieved by having lower latency, as the command is sent down to the transmitter on the "best" link as is continuously monitored by the system (similar to the uplink bonding method), so that if a single link/modem suffers an increase in its delay the system automatically uses another one if such a link has lower latency at that time.

It will further be appreciated that IP devices such as GPS receivers, IP sensors, wireless sensors, and IP audio/video cameras with their built in IP addresses may communicate transparently over Internet 45.

In an alternative embodiment of the present invention, the system may be implemented in a standby/sleep mode to allow for long term surveillance with limited power resources. Thusly transmission/reception occurs only at pre-programmed, and/or remotely or locally controlled, set intervals.

Unless specifically stated otherwise, as apparent from the preceding discussions, it is appreciated that, throughout the specification, discussions utilizing terms such as "processing," "computing," "calculating," "determining," or the like, refer to the action and/or processes of a computer, computing system, or similar electronic computing device that manipulates and/or transforms data represented as physical, such as electronic, quantities within the computing system's registers and/or memories into other data similarly represented as physical quantities within the computing system's memories, registers or other such information storage, transmission or display devices.

Embodiments of the present invention may include apparatus for performing the operations herein. This apparatus may be specially constructed for the desired purposes, or it may comprise a general-purpose computer selectively activated or reconfigured by a computer program stored in the computer. Such a computer program may be stored in a computer readable storage medium, such as, but not limited to, any type of disk, including floppy disks, optical disks, magnetic-optical disks, read-only memories (ROMs), compact disc read-only memories (CD-ROMs), random access memories (RAMs), electrically programmable read-only memories (EPROMs), electrically erasable and programmable read only memories (EEPROMs), magnetic or optical cards, Flash memory, or any other type of media suitable for storing electronic instructions and capable of being coupled to a computer system bus.

The processes and displays presented herein are not inherently related to any particular computer or other apparatus. Various general-purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the invention as described herein.

Embodiments of the present invention have been described with particular reference to the examples illustrated. However, it will be appreciated that variations and modifications may be made to the examples described within the scope of the present invention.

## Claims

1. A transceiver unit (20) for generating bonded streams of data, the unit comprising:
a data processor (21) to bond a first multiplicity of outgoing streams of data into an outgoing bonded stream;
a scheduler (90) to transmit said outgoing bonded stream via a second multiplicity of modems (22) for communication over a third multiplicity of wireless or wired channels; and
an assembly engine (160) to receive and assemble said incoming bonded stream from said third multiplicity of wireless or wired channels into a fourth multiplicity of output data.

2. A transceiver unit (20) for generating generally secure bonded streams of data, the unit comprising:
a data processor (21) to encrypt a first multiplicity of outgoing streams of data to be protected into an outgoing bonded stream;
a scheduler (90) to direct packets of said outgoing bonded stream towards a second multiplicity of modems (22) for communication over a third multiplicity of wireless channels, wherein at least one channel has data from more than one outgoing stream, and:
an assembly engine (160) to receive and assemble said incoming bonded stream from said third multiplicity of wireless channels into a fourth multiplicity of output data.

3. A transceiver unit (20) for communicating with at least one media device (1, 2, 3, 4) for remote viewing purposes, the unit comprising:
a connection to said at least one media device;
a data processor (21) to bond a first multiplicity of outgoing streams from said at least one media device at a remote viewing location into an outgoing bonded stream;
a scheduler (90) to transmit said outgoing bonded stream via a second multiplicity of modems (22) for communication at least over a third multiplicity of wireless channels servicing said remote viewing location; and
a device controller (200) to instruct said at least one media device.

4. The unit according to any of claims 1 - 3 and wherein said outgoing data stream comprises at least one of IP audio/video, non IP audio/video, non-embedded separated audio and non-audio/video data, and also comprising a decoder to decode said at least one of said IP audio/video streams.

5. The unit according to any of claims 1 - 3 and also comprising an encrypter to encrypt any outgoing data per individual data streams or per bonded data stream, and a decrypter to decrypt any incoming data per individual data stream or per bonded data stream.

6. The unit according to any of claims 1 - 3 and wherein each said wireless channel is one of the following wireless channels: a cellular channel, a satellite channel, a Wi-Fi channel, a WiMax channel, microwave, COFDM, a dedicated RF (radio frequency) channel and a proprietary channel.

7. The unit according to claim 3 wherein said media device comprises at least one of an IP sensor, a non IP sensor, an IP camera, a non IP camera and a computer.

8. The unit according to any of claims 1-3 and wherein said scheduler comprises a packet director to direct packets of said outgoing bonded stream towards different ones of said modems, wherein at least one channel has data from more than one outgoing stream.

9. The unit according to claim 1 or 2 and wherein said unit comprises a device controller to instruct at least one media device.

10. The unit according to claim 3 or claim 13 and wherein said device controller comprises means to pass media control instructions from a remote controller.

11. The unit according to claim 3 or claim 13 and also comprising a traffic analyzer to analyze performance statistics for at least each of said second multiplicity of modems and wherein said device controller comprises means to control at least one external media encoder present in said at least one media device, according to the output of said traffic analyzer.

12. A method for generating bonded streams of data, the method comprising:
bonding a first multiplicity of input streams of data into an outgoing bonded stream;
scheduling said outgoing bonded stream for transmission via a second multiplicity of modems (22) for communication over a third multiplicity of wireless or wired channels; and
receiving and assembling said incoming bonded stream into a fourth multiplicity of output data.

13. A method for generating generally secure bonded streams of data, the method comprising:
encrypting and scrambling a first multiplicity of outgoing streams of data to be protected into an outgoing bonded stream;
scheduling packets of said outgoing bonded stream towards different ones of a second multiplicity of modems (22) for communication over a third multiplicity of channels, wherein at least one channel has data from more than one outgoing stream; and
receiving and assembling said incoming bonded stream into a fourth multiplicity of data output streams.

14. A method for use with at least one media device (1, 2, 3, 4) for remote viewing purposes, the method comprising:
connecting to at least one media device;
bonding a first multiplicity of outgoing streams from said at least one media device at a remote viewing location into an outgoing bonded stream;
transmitting said outgoing bonded stream via a second multiplicity of modems (22) for communication over a third multiplicity of wireless channels servicing said remote viewing location; and
instructing said at least one media device.

15. The method according to any of claims 12-14 and wherein said outgoing data stream comprises at least one of IP audio/video, non IP audio/video, non-embedded separated audio and non-audio/video data and wherein each said wireless channel is one of the following wireless channels: a cellular channel, a satellite channel, a Wi-Fi channel, a WiMax channel, microwave, a dedicated RF (radio frequency) channel and a proprietary channel.
